# EUROPÄISCHE PATENTSCHRIFT

(11) **EP 0 468 200 B1**
(45) Veröffentlichungstag und Bekanntmachung des Hinweises auf die Patenterteilung: **11.08.1993**
(21) Anmeldenummer: 91110151.7
(22) Anmeldetag: 20.06.1991
(51) Int. Cl.: A47L 9/10

(54) **Rohrartiger Filter**
Tubular filter
Sac de filtrage tubulaire

(30) Priorität: 23.07.1990 DE 9010910 U
(43) Veröffentlichungstag der Anmeldung: 29.01.1992
(73) Patentinhaber: Electrostar Schöttle GmbH & Co., D-73262 Reichenbach (DE)
(72) Erfinder: Hentzschel, Wolfgang, Dipl.-Ing., W-7024 Filderstadt 4 (DE)
(74) Vertreter: KOHLER SCHMID + PARTNER

(56) Entgegenhaltungen:
- DE-A- 3 129 371
- DE-A- 3 734 355
- DE-A-29 018 76
- DE-C- 656 164
- JP-A- 5 335 267
- US-A- 959 936
- US-A- 1 566 088
- US-A- 2 731 106
- US-A- 2 814 357
- US-A- 3 856 488

## Beschreibung

Die Erfindung bezieht sich auf einen rohrartigen Filter, insbesondere für einen Staubsauger, dessen Mantel aus aneinandergereihten Falten besteht. Solche Filter sind in DE-C- 656 164 und DE-A-3 129 371 dargestellt. Der Einfachheit halber wird nachstehend lediglich noch von einem Staubsauger-Filter die Rede sein, weil dies das bevorzugte Einsatzgebiet ist, jedoch darf dies nicht einschränkend ausgelegt werden. Wenn ein derartiger Filter, beispielsweise an einem seiner beiden Enden mittels einer Platte oder einem ähnlichen Element verschlossen ist, so daß insgesamt ein topfförmiges Gebilde entsteht, so wird er trotzdem noch als rohrartiger Filter angesehen, weil das Medium in bevorzugter Weise nur die Rohrwandung durchströmt und zwar im Normalfalle von außen nach innen. Solche Filter kann man sowohl für Trocken-Staubsauger als auch für Naß-Trocken-Staubsauger verwenden. Sie müssen infolgedessen nicht nur die angesaugte Luft, sondern gegebenenfalls auch das Wasser hindurchlassen. Wenn ein solcher Filter von außen nach innen durchströmt wird, was, wie gesagt, das übliche ist, so lagert sich das feste Sauggut außen am Filter ab.

Der bekannte rohrartige Filter hat im Querschnitt V-förmige Falten und infolgedessen besitzt er auch V-förmige Faltenzwischenräume. Betrachtet man die radiale Durchströmrichtung, so verengen sich diese Faltenzwischenräume von außen nach innen und dies hat zur Folge, daß sie sich relativ leicht zusetzen. Teilweise bilden sich auch nur Brücken. Diese fallen zumindest dann nach unten, wenn das Filter einer Erschütterung ausgesetzt ist. Solche Erschütterungen treten beim Transport des Staubsaugers auf oder aber wenn man den Filter mittels einer speziell hierfür vorgesehenen Vorrichtung rüttelt.

Weil die Faltenzwischenräume unten verschlossen sind, setzen sie sich zumindest nach dem Rütteln von unten nach oben hin immer mehr zu und damit nimmt dann die Durchlässigkeit für die Luft und gegebenenfalls die Flüssigkeit immer stärker ab. Das Filter muß infolgedessen öfter ausgebaut und durch ein anderes ersetzt oder gereinigt werden. Andererseits benötigt man aber einen möglichst großen Durchtrittsquerschnitt eines solchen Filters, um die Strömungsgeschwindigkeit pro Flächeneinheit gering zu halten.

Die Aufgabe der Erfindung besteht nun darin, einen Filter der eingangs beschriebenen Art so weiterzubilden, daß er eine längere Standzeit hat, d.h., sich bei gleichem Schmutzaufkommen nicht so schnell zusetzt wie der bekannte.

Zur Lösung dieser Aufgabe wird erfindungsgemäß vorgeschlagen, daß der rohrartige Filter gemäß dem Oberbegriff des Anspruchs 1 entsprechend dem kennzeichnenden Teil dieses Anspruchs ausgebildet ist. Weil sich nunmehr die Faltenzwischenräume nach unten hin erweitern, kann es bei diesem Filter, beispielsweise im oberen Bereich, durchaus zu Brückenbildungen kommen, jedoch fallen diese Brücken, wenn sie schwer genug sind oder wenn der Filter erschüttert oder gar gerüttelt wird, leicht nach unten. Dort kommt es aber nicht sofort wieder zur Brückenbildung, weil dies aufgrund des erweiterten Querschnitts im unteren Bereich gar nicht möglich ist. Die Herstellung eines derartigen Filters ist nicht notwendigerweise komplizierter oder aufwendiger, vielmehr kann gerade das Gegenteil der Fall sein. Selbstverständlich kann auch dasselbe Filtermaterial verwendet werden, das man bei einem vergleichbaren Filter des Standes der Technik mit Vorteil schon verwendet hat. Zweckmäßigerweise handelt es sich auch insoweit um ein herausnehmbares und damit austauschbares oder reinigungsfähiges Filter.

Eine Weiterbildung der Erfindung sieht vor, daß die Faltenzwischenräume stetig von oben nach unten hin erweitert sind. Sowohl aus fertigungstechnischen als auch betriebstechnischen Gründen ist diese Form des Zwischenraums besonders vorteilhaft. In radialer Richtung gesehen kann die Tiefe der Faltenzwischenräume über die gesamte Filterhöhe konstant sein und sie ist es im bevorzugten Falle auch.

Um sicher auszuschließen, daß auch im obersten Teil der Faltenzwischenräume, in welchem sie sehr eng zusammenlaufen, Schmutzbrücken verbleiben, sind in eines Weiterbildung der Erfindung die Faltenzwischenräume trapezförmig ausgebildet, wobei die kürzere Grundlinie am oberen und die längere am unteren Filterende liegen. Durch die Verbreiterung der Faltenzwischenräume im obersten Bereich ist auch hier jegliche Brückenbildung ausgeschlossen, und zwar selbst dann, wenn keine Rüttelvorrichtungen für den Filter vorgesehen sind. Zur Vereinfachung weisen dabei die Falten ebenfalls eine trapezförmige Oberfläche auf.

Da es fertigungstechnisch schwierig ist, die für die Falten erforderlichen Falzlinien schräg anzuordnen, sind vorzugsweise bei parallel liegenden Falzlinien die Falten in ihrem oberen Bereich zur Bildung von Verengungen durch Verleimung, Klammerung od.dgl. zusammengezogen. Man kann nunmehr parallele Falzlinien vorsehen und die Trapezform durch das Zusammenziehen der Falten erreichen. Um dabei eine Verengung am oberen Filterende zu erhalten, weisen die Faltenzwischenräume etwa in der Mitte Längsfalzlinien auf.

Eine weitere Ausgestaltung der Erfindung besteht darin, daß sich die Faltenzwischenräume nach oben hin bis etwa zum Wert Null verengen. Anders ausgedrückt, liegen die Falten in diesem Falle oben unmittelbar aneinander an.

Eine andere Ausführungsform der Erfindung ist durch ein Filtermaterial konstanter Dicke gekennzeichnet, wobei sich die Falteninnenräume nach unten hin bis etwa zum Wert Null verengen. Das bedeutet, daß sich die Falteninnenräume von oben nach unten gesehen in dem Maße verengen, wie sich die Faltenzwischenräume erweitern. Von der Form her gesehen können die Falteninnenräume den gleichen Querschnitt aufweisen, wie die Faltenzwischenräume. Es liegt ein identischer Querschnitt der Falteninnenräume und Faltenzwischenräume auf etwa halber Filterhöhe vor, wenn es sich um ein zylindrisches Filter handelt, dessen äußere Faltenenden auf einem gedachten, das Filter umhüllenden Zylinder liegen und in dessen Falteninnenräume an einem gedachten inneren Zylinder anliegen. Das Filter muß aber nicht notwendigerweise zylindrisch sein, vielmehr kommt auch eine konische, also zumindest außen kegelstumpfähnliche Form in Frage. Wenn es sich jedoch um ein Filter für einen Naß-Trocken-Staubsauger handelt, so wird der Zylinderform mit konstantem Innenquerschnitt -über die Höhe gesehen- der Vorzug gegeben. Der Grund liegt darin, daß man bei Naß-Staubsaugern einen Schwimmerschalter benötigt und der Innenraum des Filters diesen Schwimmer aufnehmen kann. Der Raum für den Schwimmer sollte sich aber von unten nach oben gesehen weder erweitern noch verringern, damit eine einwandfreie Funktion der Schwimmer-Abschalteinrichtung gewährleistet ist.

Eine Weiterbildung der Erfindung ist dadurch gekennzeichnet, daß die Faltenzwischenräume und die Falteninnenräume eine etwa gleiche Gestalt aufweisen, sie aber um 180 Grad gewendet angeordnet sind. Über die Höhe gesehen haben infolgedessen ein Falteninnenraum und ein Faltenzwischenraum zusammen immer die gleiche Querschnittsfläche. Der 180-Grad-Winkel ist hinsichtlich dem Ausgangsmaterials für den Zuschnitt sehr vorteilhaft aber nicht unbedingt erforderlich.

Eine weitere Variante der Erfindung kennzeichnet sich dadurch, daß die Falten an ihrem unteren Bereich einen etwa V-förmigen und an ihrem oberen Ende einen etwa U-förmigen Zwischenraum aufweisen. Hinsichtlich der Falteninnenräume verlaufen die Querschnitte über die Höhe gesehen gerade umgekehrt. Die V-Form ist strenggenommen eine U-Form mit sehr kurzem U-Querschenkel.

Eine weitere Ausgestaltung der Erfindung sieht vor, daß die U-Querschenkel benachbarter Falten am oberen Filterende und benachbarter Faltenzwischenräume am unteren Filterende unmittelbar aneinander anschließen. Es entsteht auf diese Weise eine geschlossene obere äußere und eine geschlossene untere innere Kontur, welche die Abdichtung und auch die Fertigung dieses gesamten Filters erheblich vereinfacht. Ein besonderer Vorteil ergibt sich aber dadurch, daß die Ausbildung eines dichten unteren Filterendes im Gegensatz zum Stand der Technik nicht notwendigerweise das Verschließen der unteren Enden der Zwischenräume verlangt, so daß bei entsprechendem Platz unterhalb des Filters der in den Faltenzwischenräumen befindliche Schmutz beim Rütteln und dgl. aus den Faltenzwischenräumen heraus nach unten austreten, beispielsweise in einen Schmutzauffangbehälter gelangen kann. Dies erhöht die Standzeit des Filters ganz erheblich. Die unmittelbar aneinander anliegenden Faltenwände am unteren Filterende und die aneinander anliegenden Faltenwände benachbarter Falten am oberen Filterende sind dicht miteinander verbunden um unerwünschte Strömungswege zu verhindern.

In diesem Zusammenhang wird eine Weiterbildung der Erfindung vorgeschlagen, welche darin besteht, daß die Faltenzwischenräume am unteren Filterende dicht an einem Bund eines unteren Filterabschlußelements anliegen. Dieser Bund befindet sich im Inneren des Filters und deshalb wird die Innenfläche des unteren Endes der Faltenzwischenräume außen an den Bund angeklebt oder in anderer bekannter und geeigneter Weise dicht befestigt. Dies führt gegenüber dem Stand der Technik auch zu einem vergleichsweise kleineren Filterabschlußelement. Ansonsten kann letzteres in gleicher Weise ausgebildet werden, wie das Vorbekannte. Die Filterzwischenräume schließen hierbei unmittelbar aneinander an, weswegen die unteren Faltenwandungen ebenfalls unmittelbar aneinander anliegen. Auf diese Weise verhindert man einen Schmutzaustausch über die unteren Faltenenden, wenn diese in radialer Richtung über den Bund des Filterabschlußelements vorstehen. Weil man diese Filterzwischenräume bzw. deren U-Querschenkel unmittelbar an den Bund eines unteren Filterabschlußelements ankleben kann, entfällt das verhältnismäßig teure Einbetten des gesamten unteren Filterquerschnitts in ein Dichtmaterial, beispielsweise Polyuretan, im Inneren eines das untere Filterende aufnehmenden topfförmigen Filterabschlußelements. Entsprechendes gilt im übrigen auch für das obere Filterende.

In dieser Hinsicht sieht eine bevorzugte Ausführungsform der Erfindung vor, daß die U-Querschenkel der oberen Faltenenden dicht an einem oberen Filterring, insbesondere der Innenfläche eines Filterring-Außenbundes, anliegen. Auch hierbei liegen die U-Querschenkel der oberen Faltenenden bevorzugterweise unmittelbar aneinander an. Der Filterring kann zugleich ein elastischer Dichtring sein. Im übrigen kann sich in sehr zweckmäßiger Weise im Filterinneren ein an sich bekanntes Stützgewebe befinden, das gleich ausgebildet sein kann wie beim Stand der Technik.

Die Erfindung wird nachstehend anhand der Zeichnung näher erläutert. Die Zeichnung zeigt ein Ausführungsbeispiel der Erfindung. Hierbei stellen dar:
- Fig. 1: Eine Seitenansicht des Filters,
- Fig. 2: eine Ansicht des Filters von unten,
- Fig. 3: eine Ansicht des Filters von oben,
- Fig. 4: einen Abschnitt der Abwicklung des Filtermaterials,
- Fig. 5: die Unteransicht eines Teils eines Filters einer anderen Ausführungsform,
- Fig. 6: eine Draufsicht nach Fig. 5,
- Fig. 7: eine Abwicklung nach den Figuren 5 bzw. 6.

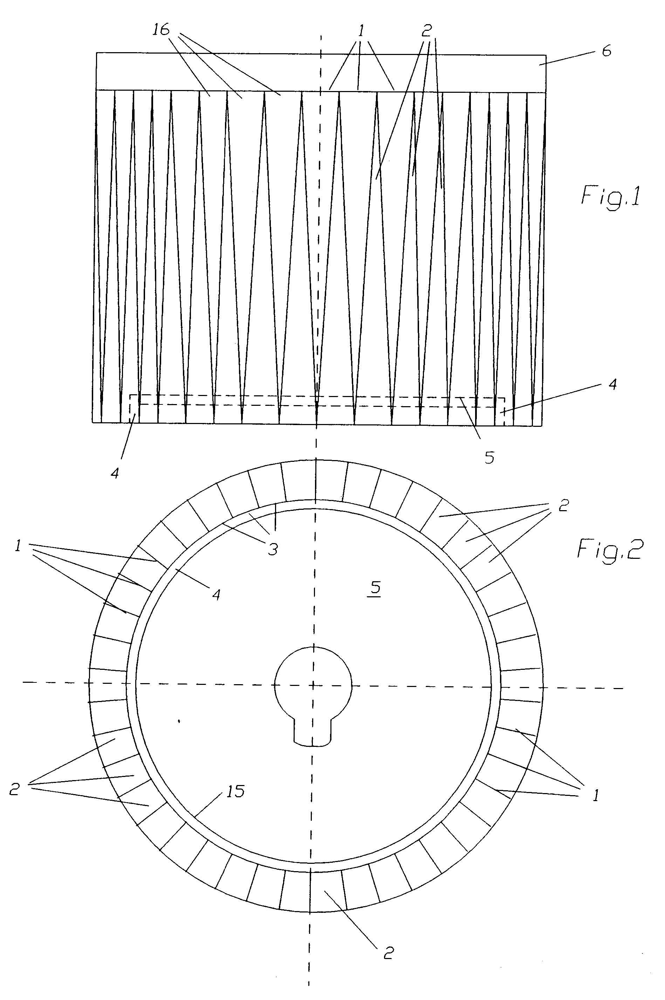

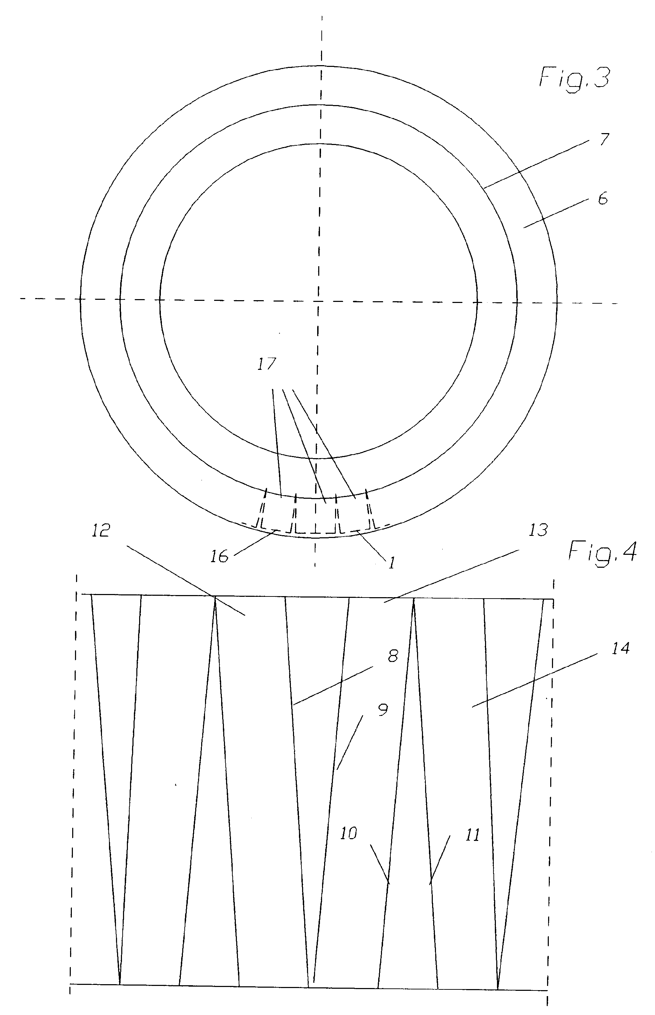

Der rohrartige Filter ist mit gleichmäßig am Umfang angeordneten Falten 1 versehen, deren Außenkonturen auf einem gemeinsamen gedachten Kreiszylinder liegen und deren innere Enden an einem gemeinsamen, hierzu konzentrischen gedachten Innenzylinder gelegen sind. Diese Falten haben aber gemäß Fign. 1 und 3 eine ganz besondere Querschnittsform, die dazu führt, daß sich die Faltenzwischenräume 2 zwischen benachbarten Falten 1 in Gebrauchslage von oben nach unten hin erweitern. An ihrem unteren Ende -Fig. 1 zeigt die Gebrauchslage des Filters- ist der Faltenzwischenraum 2 etwa U-förmig (Fig. 2). Nach oben hin verengen sich die Faltenzwischenräume immer mehr bis schließlich der Wert Null erreicht ist. Dort liegen dann die jeweils benachbarten Faltenwände zweier Falten unmittelbar aneinander an. Umgekehrt haben die Falten an ihrem unteren Ende einen sehr spitzen Querschnitt, der dadurch zustande kommt, daß dort die beiden Wände jeder Falte unmittelbar aneinander anliegen. Demnach haben also die Falten und die Faltenzwischenräume jeweils die gleiche Form, jedoch sind die Faltenzwischenräume gegenüber den Falten jeweils um 180 Grad gewendet. Aus dem Vorstehenden ergibt sich desweiteren, daß die Querschenkel 3 der im Querschnitt U-förmigen Faltenzwischenräume unmittelbar aneinander anstoßen, so daß wenn man von der Materialdicke der Faltenwände absieht, die Querschenkel der Faltenzwischenräume am untersten Ende quasi unmittelbar ineinander übergehen. Die geringen Abstände zwischen den benachbarten Querschenkeln 3 werden von den inneren Enden der Faltenwände überbrückt, so daß eine umlaufende Linie oder in der Praxis ein umlaufender Bereich am unteren Ende entsteht, der an einen nach unten ragenden Bund 4 eines Filterabschlußelements 5 dicht angeklebt werden kann. Das Filterabschlußelement hat eine topfförmige Gestalt mit in Gebrauchslage nach unten ragenden Topfrand, welcher den erwähnten Bund 4 bildet.

Aufgrund der Identität des Faltenquerschnitts und des Faltenzwischenraumquerschnitts am oberen und unteren Filterende sind die Verhältnisse am oberen Filterende insoweit vergleichbar, als dort ebenfalls eine umlaufende Linie oder ein umlaufender Bereich entsteht, jedoch liegt dieser wie Fig. 1 der Zeichnung zeigt, außen. Er wird von einem oberen Filterring 6 übergriffen, wobei auch an dieser Stelle für absolute Dichtheit gesorgt ist. Der obere Filterring 6 kann in bekannter Weise ausgebildet und aus weichelastischem Material hergestellt sein. Beim Ausführungsbeispiel nach Fig. 3 ist er mit einer bekannten konzentrischen Rille 7 ausgestattet. Lediglich um Mißverständnisse zu vermeiden, wird darauf hingewiesen, daß die Falten in Fig. 2 gegenüber denjenigen der Fig. 1 um eine halbe Einheit in Umfangsrichtung versetzt gezeichnet sind. Außerdem wird nochmals ausdrücklich angemerkt, daß dieser Filter Außen und Innen jeweils an einen gedachten Kreiszylinder anstößt, die Form aber durchaus auch abweichend sein kann, beispielsweise konisch verjüngend oder erweiternd.

Fig. 4 zeigt ein Teilstück der Abwicklung für das Filter mit den Rillinien 8, 9 und 10, 11. Die Rillinien 8, 9 schließen ein gleichseitiges spitzes Dreieck ein, welches die Außenkontur einer Falte 1 ergibt. Demgegenüber bilden die Rillinien 10 und 9 ein Dreieck gleicher Form, welches nach dem Falten das innere Ende eines Faltenzwischenraums 2 bildet. Die durch parallele Linien begrenzten Flächen 12 und 13 ergeben die Seitenflanken einer Falte 1, während die benachbarten Flächen 13 und 14 seitliche Begrenzungen eines Faltenzwischenraums 2 sind.

Wie man besonders gut aus Fig. 1 ersieht, entsteht durch die benachbarten, dreieckförmigen, außen liegenden Stirnflächen der Falten 1 eine unterbrochene umlaufende Mantellinie, welche bei tangentialer Anströmung durch die Saugluft letztere in Umfangsrichtung gut leitet. Diese Wirkung nimmt allerdings von oben nach unten hin ab. Durch das Vorbeiströmen der Luft wird dort die Ablagerung von Schmutz vermieden und es entsteht auf diese Weise ein Selbstreinigungseffekt der, wie gesagt, im oberen Bereich besonders stark ist. In den Faltenzwischenräumen 2 ist eine Brückenbildung und ein Anhaften des angesaugten Schmutz dadurch erschwert, daß sich diese Räume von oben nach unten hin stetig erweitern. Sollte sich trotzdem Schmutz in den Faltenzwischenräumen 2 ansammeln, so kann dieser bei Erschütterungen oder beim Rütteln dieses Filters von den Wänden der Faltenzwischenräume abgeschüttelt werden und er kann den Filter deshalb leicht nach unten hin verlassen, weil die Faltenzwischenräume 2 im Gegensatz zum vorbekannten Filter, nach unten hin offen sind. Dies rührt gemäß Fig. 1 daher, daß der Außenumfang bzw. der Bund 4 des Filterabschlußelements 5 kleiner ist als der Außenumfang des Filters oder anders ausgedrückt, weil dieser Bund 4 nur bis an die inneren Enden der Falten 1 bzw. den Grund der Faltenzwischenräume 2 reicht.

Aus dem Vorstehenden ergibt sich, daß dieser Filter fertigungstechnisch Vorteile bringt und sich weniger zusetzt als ein vorbekannter Filter, und daß im Falle der Ablagerung von Schmutz in den Faltenzwischenräumen dieser nach unten herausgeschüttelt werden kann, so daß der Filter wieder gut zugänglich ist, ohne daß man ihn deshalb ausbauen und reinigen muß. Im Inneren des Filters befindet sich ein bekanntes gitterartiges Stützgewebe 15, welches die Festigkeit erhöht und den Luftdurchsatz nicht nenneswert reduziert. Der Ordnung halber wird noch nachgetragen, daß die U-Querschenkel der oberen Faltenenden gemäß Fign. 1 und 3 mit 16 bezeichnet sind. In Fig. 3 sind drei obere Faltenenden angedeutet und man erkennt dort auch die Falteninnenräume 17, die sich von oben nach unten bis etwa auf den Wert Null verengen.

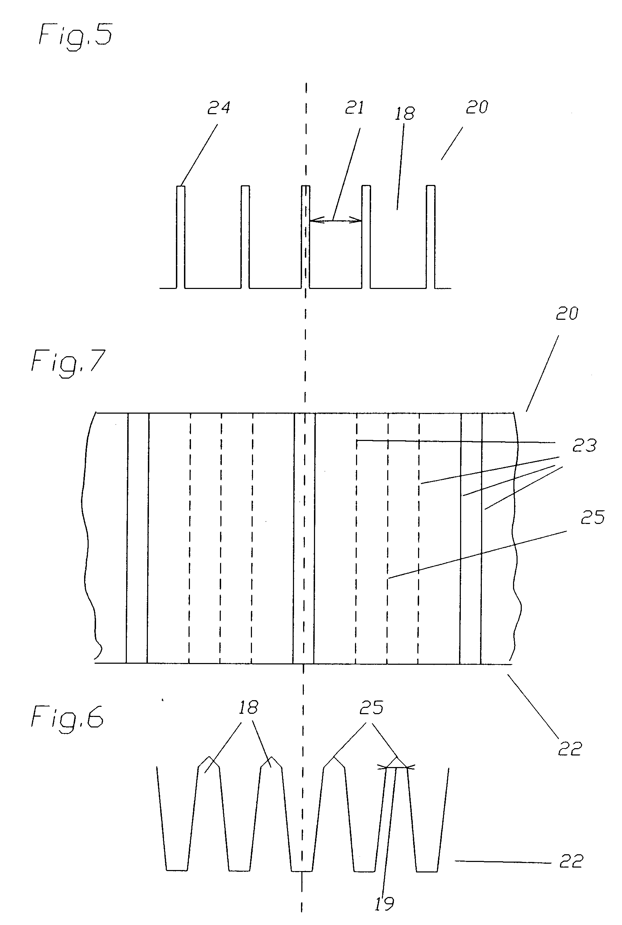

Beim Ausführungsbeispiel nach den Figuren 5 bis 7 sind die Faltenzwischenräume 18 trapezförmig gestaltet. Wie die Abwicklung gemäß Fig. 7 zeigt, liegen die Falzlinien 23 aus Fertigungsgründen parallel zueinander. Um nun die Trapezform der Faltenzwischenräume 18 zu erreichen, sind die Falten 22 am unteren Ende (Fig. 5) zusammengeklemmt, während sie am oberen Ende (Fig. 6) ihre durch die Falzlinien 23 gegebene Form beibehalten. Am unteren Filterende 20 liegt die längere Grundlinie 21 des trapezförmigen Zwischenraumes, während sich die kürzere Grundlinie 19 am oberen Ende 22 befindet. Dabei wird die kürzere Grundlinie durch ein Einknicken des Faltenzwischenraumes 18 erreicht. Um dies zu erleichtern ist in der Mitte des Faltenzwischenraumes 18 noch eine zusätzliche Falzlinie 25 vorgesehen. Durch die Trapezform erzielt man auch im oberen Bereich eine breitere Fläche der Faltenzwischenräume 18, so daß Brückenbildungen von Schmutzteilchen nahezu ausgeschlossen sind.

## Patentansprüche

1. Rohrartiger Filter, insbesondere für einen Staubsauger, dessen Mantel aus aneinandergereihten Falten (1) besteht, dadurch gekennzeichnet, daß die Faltenzwischenräume (2) nach dem im Gebrauch unteren Filterende hin erweitert sind.

2. Filter nach Anspruch 1, dadurch gekennzeichnet, daß die Faltenzwischenräume (2) stetig von oben nach unten hin erweitert sind.

3. Filter nach einem oder beiden der vorhergehenden Ansprüche, dadurch gekennzeichnet, daß die Faltenzwischenräume (18) trapezförmig ausgebildet sind, wobei die kürze Grundlinie 19 am oberen (20) und die längere (21) am unteren Filterende (22) liegen.

4. Filter nach Anspruch 3, dadurch gekennzeichnet, daß die Falten (22) eine trapezförmige Oberfläche ausweisen.

5. Filter nach einem oder mehreren der vorhergehenden Ansprüche, dadurch gekennzeichnet, daß bei parallel liegenden Falzlinien (23) die Falten (24) in ihrem oberen Bereich zur Bildung von Verengungen (25) durch Verleimung, Klammern od. dergl. zusammengezogen sind.

6. Filter nach Anspruch 5, dadurch gekennzeichnet, daß die Faltenzwischenräume (18) etwa in der Mitte Längsfalzlinien (26) aufweist.

7. Filter nach Anspruch 1 oder 2, dadurch gekennzeichnet, daß sich die Faltenzwischenräume (2) nach oben hin bis etwa zum Wert Null verengen.

8. Filter nach Anspruch 7, gekennzeichnet durch Filtermaterial konstanter Dicke, wobei sich die Falteninnenräume (17) nach unten hin bis etwa zum Wert Null verengen.

9. Filter nach wenigstens einem der vorhergehenden Ansprüche, dadurch gekennzeichnet, daß die Faltenzwischenräume (2) und die Falteninnenräume (17) eine etwa gleiche Gestalt aufweisen, sie aber um 180 Grad gewendet angeordnet sind.

10. Filter nach wenigstens einem der vorhergehenden Ansprüche, dadurch gekennzeichnet, daß die Falten (1) an ihrem unteren Bereich einen etwa V-förmigen und an ihrem oberen Ende einen etwa U-förmigen Querschnitt aufweisen.

11. Filter nach Anspruch 10, dadurch gekennzeichnet, daß die U-Querschenkel (16) benachbarter Falten (1) am oberen Filterende und benachbarter Faltenzwischenräume (2) am unteren Filterende unmittelbar aneinander anschließen.

12. Filter nach Anspruch 11, dadurch gekennzeichnet, daß die Faltenzwischenräume (2) am unteren Filterende dicht an einem Bund (4) eines unteren Filterabschlußelements (5) anliegen.

13. Filter nach Anspruch 11 oder 12, dadurch gekennzeichnet, daß die U-Querschenkel (16) der oberen Faltenenden dicht an einem oberen Filterring (6), insbesondere der Innenfläche eines Filterring-Außenbunds, anliegen.

14. Filter nach Anspruch 13, dadurch gekennzeichnet, daß der obere Filterring (6) zugleich ein elastischer Dichtring ist.

15. Filter nach wenigstens einem der vorhergehenden Ansprüche, dadurch gekennzeichnet, daß sich im Filterinneren ein Stützgewebe (15) befindet.

## Claims

1. Tubular filter, in particular for a vacuum cleaner, of which the casing consists of folds (1) arranged in rows adjacent one another, characterised in that the spaces (2) between the folds are widened towards the end of the filter that is at the bottom during use.

2. Filter according to Claim 1,
characterised in that the spaces (2) between the folds widen continuously from the top towards the bottom.

3. Filter according to either or both of the preceding claims, characterised in that the spaces (18) between the folds are trapezoidal, wherein the short base line (19) is located at the upper filter end (20) and the longer base line (21) is located at the lower filter end (22).

4. Filter according to Claim 3,
characterised in that the folds (22) have a trapezoidal surface.

5. Filter according to one or more of the preceding claims, characterised in that, when the fold lines (23) are parallel, the folds (24) are contracted at the top by gluing, clamps, or the like, to form narrowed areas (25).

6. Filter according to Claim 5,
characterised in that the spaces (18) between the folds comprise longitudinal fold lines (26) approximately in the centre.

7. Filter according to Claim 1 or 2,
characterised in that the spaces (2) between the folds narrow upwards approximately to nothing.

8. Filter according to Claim 7,
characterised by filter material of a constant thickness, wherein the spaces (17) inside the folds narrow downwards approximately to nothing.

9. Filter according to at least one of the preceding claims, characterised in that the spaces (2) between the folds and the spaces (17) inside the folds have approximately the same shape, but are disposed such that they are turned through 180°.

10. Filter according to at least one of the preceding claims, characterised in that the folds (1) have an approximately V-shaped cross-section at the bottom and an approximately U-shaped cross-section at their top ends.

11. Filter according to Claim 10,
characterised in that the U-shape transverse legs (16) of adjacent folds (1) at the upper end of the filter and of adjacent spaces (2) between the folds at the lower end of the filter adjoin each other directly.

12. Filter according to Claim 11,
characterised in that at the lower end of the filter the spaces (2) between the folds closely abut a collar (4) of a lower filter sealing element (5).

13. Filter according to Claim 11 or 12,
characterised in that the U-shape transverse legs (16) of the upper fold ends closely abut an upper filter ring (6), in particular the inner surface of a filter ring external collar.

14. Filter according to Claim 13,
characterised in that the upper filter ring (6) is also a resilient sealing ring.

15. Filter according to at least one of the preceding claims, characterised in that a supporting fabric (15) is located inside the filter.

## Revendications

1. Filtre tubulaire, notamment pour aspirateur, dont l'enveloppe se compose de plis (1) alignés les uns contre les autres, caractérisé en ce que les intervalles entre les plis (2) sont élargis en direction de l'extrémité du filtre qui, lors de l'utilisation, se trouve en bas.

2. Filtre selon la revendication 1, caractérisé en ce que les intervalles entre les plis (2) s'élargissent progressivement de haut en bas.

3. Filtre selon l'une des revendications précédentes ou les deux, caractérisé en ce que les intervalles entre les plis (18) sont réalisés de manière trapézoïdale, la ligne de base (19) la plus courte se trouvant à l'extrémité supérieure (20) du filtre et la ligne de base (21) la plus longue, à l'extrémité inférieure (22) du filtre.

4. Filtre selon la revendication 3, caractérisé en ce que les plis (22) présentent une surface trapézoïdale.

5. Filtre selon l'une ou plusieurs des revendications précédentes, caractérisé en ce que, lorsque les lignes de pliage (23) sont parallèles, les plis (24) sont resserrés dans leur zone supérieure par collage, agrafage ou de manière analogue pour former des rétrécissements (25).

6. Filtre selon la revendication 5, caractérisé en ce que les intervalles entre les plis (18) présentent approximativement en leur milieu des lignes de pliage longitudinales (26).

7. Filtre selon la revendication 1 ou 2, caractérisé en ce que les intervalles entre les plis (2) se rétrécissent vers le haut jusqu'à environ la valeur zéro.

8. Filtre selon la revendication 7, caractérisé par un matériau de filtre d'épaisseur constante, l'intérieur des plis (17) se rétrécissant vers le bas jusqu'à environ la valeur zéro.

9. Filtre selon au moins l'une des revendications précédentes, caractérisé en ce que les intervalles entre les plis (2) et l'intérieur des plis (17) présentent une forme approximativement identique, mais sont disposés tournés de 180 degrés.

10. Filtre selon au moins l'une des revendications précédentes, caractérisé en ce que les plis (1) présentent dans leur zone inférieure une section approximativement en forme de V et à leur extrémité supérieure, une section approximativement en forme de U.

11. Filtre selon la revendication 10, caractérisé en ce que les plis (1) à l'extrémité supérieure du filtre et les intervalles entre les plis (2) à l'extrémité inférieure du filtre qui sont adjacents au côté transversal (16) de l'U se succèdent directement les uns aux autres.

12. Filtre selon la revendication 11, caractérisé en ce que les intervalles entre les plis (2) à l'extrémité inférieure du filtre sont placés de manière étanche contre une collerette (4) d'un élément inférieur de fermeture du filtre (5).

13. Filtre selon la revendication 11 ou 12, caractérisé en ce que le côté transversal (16) de l'U de chacune des extrémités supérieures des plis est placé de manière étanche contre une bague de filtre supérieure (6), notamment contre la surface interne d'une collerette extérieure d'une bague de filtre.

14. Filtre selon la revendication 13, caractérisé en ce que la bague de filtre (6) supérieure est en même temps une bague d'étanchéité élastique.

15. Filtre selon au moins l'une des revendications précédentes, caractérisé en ce qu'un tissu support (15) se trouve à l'intérieur du filtre.
